# EUROPÄISCHE PATENTSCHRIFT

(11) **EP 1 653 123 B1**
(45) Veröffentlichungstag und Bekanntmachung des Hinweises auf die Patenterteilung: **09.06.2010**
(21) Anmeldenummer: 05022501.0
(22) Anmeldetag: 14.10.2005
(51) Int. Cl.: F16H 41/24

(54) **Antriebsanordnung**
Drive system
Système d'entraînement

(30) Priorität: 29.10.2004 DE 102004052665
(43) Veröffentlichungstag der Anmeldung: 03.05.2006
(73) Patentinhaber: AUDI AG, 85045 Ingolstadt (DE)
(72) Erfinder: Schäfer, Mark, 85092 Kösching (DE)
(74) Vertreter: Lehle, Josef

(56) Entgegenhaltungen:
- EP-A- 1 174 631
- EP-A- 1 347 210
- EP-A- 1 389 825
- DE-A1- 4 333 199
- DE-B3- 10 212 033
- FR-A- 2 616 184
- GB-A- 493 441

## Beschreibung

Die Erfindung betrifft eine Antriebsanordnung zwischen einer Brennkraftmaschine und einem Geschwindigkeits-Wechselgetriebe gemäß dem Oberbegriff des Patentanspruches 1.

Eine derartige Antriebsanordnung zeigt beispielsweise die DE 198 57 232 C1, bei der ein Drehmomentwandler eines automatischen Wechselgetriebes als Anfahrelement über ein scheibenförmiges Mitnehmerblech trieblich mit der Kurbelwelle der Brennkraftmaschine verbunden ist. Die Schrauben der Schrauberbindung zwischen Mitnehmerblech und Gehäuse des Drehmomentwandlers sind von der Motorseite her eingeschraubt, wobei am Zylinderkurbelgehäuse der Brennkraftmaschine eine entsprechende Öffnung für die Zugänglichkeit der Schrauben vorgesehen sein muss. Anstelle eines Drehmomentwandlers kann als Anfahrelement auch eine Reibungskupplung und/oder ein Zweimassenschwungrad verwendet sein.

Aus der EP-A-1 347 210 ist eine gattungsgemäße Antriebsanordnung zwischen einer Brennkraftmaschine und einem nachgeschalteten Geschwindigkeits-Wechselgetriebe für Kraftfahrzeuge bekannt. Die Anordnung weist ein an der Kurbelwelle der Brennkraftmaschine über ein sich radial erstreckendes Mitnehmerblech und mittels mehrerer Schrauben befestigtes Anfahrelement auf, das auf eine Eingangswelle des Wechselgetriebes abtreibt, wobei die Eingangswelle in einer angrenzenden Wand des Wechselgetriebes und in einer zentrischen Lageraufnahme der Kurbelwelle beiderseits des Anfahrelementes drehbar gelagert ist.

Aufgabe der Erfindung ist es, eine Antriebsanordnung der gattungsgemäßen Art zu schaffen, die bei einem konstruktiv einfachen Aufbau eine verbesserte Zugänglichkeit der Schraubverbindung und zusätzliche Freiheitsgrade in der Antriebsanordnung sicherstellt.

Diese Aufgabe wird erfindungsgemäß mit den Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass das scheibenförmige Mitnehmerblech mit einem axial unmittelbar benachbarten, eine Kröpfung zum Anfahrelement aufweisenden Zwischenflansch verschraubt ist, wobei die Schrauben von der Getriebeseite her durch eine Öffnung in der Kupplungsglocke des Getriebes und zwischen dem Zwischenflansch und dem Anfahrelement einsetzbar und schraubbar sind. Das Mitnehmerblech ist zunächst nicht unmittelbar, sondern über den besagten Zwischenflansch mit dem Anfahrelement trieblich verbunden; dabei ermöglicht der mit einer Kröpfung versehene Zwischenflansch ein Abrücken des Mitnehmerbleches von dem Anfahrelement mit der Möglichkeit, die Schrauben der Schraubverbindung mit besserer Zugänglichkeit getriebeseitig durch eine Öffnung in der Kupplungsglocke des Wechselgetriebes einzusetzen und zu befestigen bzw. bei der Demontage zu lösen. Schließlich können über den Zwischenflansch definierte Positionen des Anfahrelementes relativ zur rückwärtigen Stirnwand der Brennkraftmaschine bzw. zum Mitnehmerblech eingestellt werden, ohne die Flexibilität des Mitnehmerbleches zu beeinträchtigen.

Fertigungstechnisch ist der Zwischenflansch zweiteilig aus einem äußeren, scheibenförmigen Radialabschnitt und einem radial inneren, im Querschnitt U-förmigen Ringabschnitt hergestellt, welche Abschnitte miteinander stoffschlüssig verbunden sind, z.B. durch Laserschweißen. Dabei kann bevorzugt der Zwischenflansch ebenfalls wie das Mitnehmerblech aus Stahlblech hergestellt und mit dem Anfahrelement im Bereich des inneren Abschnittes verschraubt sein.

Bei einer Antriebsanordnung, bei der das Mitnehmerblech einen Anlasserzahnkranz zum elektrischen Starten der Brennkraftmaschine trägt, können in baulich besonders günstiger Weise in dem Anlasserzahnkranz Gewindebohrungen ausgebildet sein, die in Verbindung mit den Schrauben unmittelbar zur Befestigung des Zwischenflansches am Mitnehmerblech dienen. Im Gegensatz zum Stand der Technik können somit am Mitnehmerblech ansonsten anzuordnende Gewindemuttern entfallen.

Dabei kann zur weiteren Vereinfachung der Schraubverbindung der Anlasserzahnkranz derart am Mitnehmerblech befestigt sein, dass dessen Gewindebohrungen sich mit Bohrungen im Mitnehmerblech und im Zwischenflansch überdecken, wobei die Schrauben durch den Zwischenflansch und das Mitnehmerblech hindurch geschraubt sind. Der Anlasserzahnkranz kann zusätzlich vor der Herstellung der Schraubverbindung zumindest an örtlichen Stellen mit dem Mitnehmerblech verschweißt sein.

In vorteilhafter Weiterbildung der Erfindung kann die Kröpfung des Zwischenflansches derart ausgeführt sein, dass durch den daraus resultierenden Abstand s zwischen dem Radialabschnitt des Zwischenflansches und dem benachbarten Anfahrelement der Freigang einer sich durch die Kupplungsglocke und quer zur Getriebe-Eingangswelle erstreckenden Differenzial-Achswelle sichergestellt ist. Dies ermöglicht z.B. bei frontgetriebenen Kraftfahrzeugen eine seitliche, nahe an der Brennkraftmaschine positionierte Anordnung des Differenziales für den Antrieb der Vorderräder, wobei die eine Achswelle vor dem Anfahrelement unterhalb der Eingangswelle des Wechselgetriebes verlegt werden kann.

Zur Drehstabilisierung und verbesserten Biegesteifigkeit der Antriebsanordnung kann des weiteren an der Kurbelwelle mit dem Mitnehmerblech eine Führungshülse befestigt sein, die in Verbindung mit dem Zwischenflansch eine der Lageraufnahme in der Kurbelwelle axial benachbarte Führung für das Anfahrelement bildet. Dabei kann in bevorzugt der radial innere Schenkel des im Querschnitt U-förmigen Ringabschnittes des Zwischenflansches die Führungshülse teilweise überragen.

Schließlich kann die Öffnung in der Kupplungsglocke in der Einbauposition im Kraftfahrzeug betrachtet nach unten ausgerichtet und mittels eines Deckels verschließbar sein. Dies stellt eine gute Zugänglichkeit bei der Herstellung der Schraubverbindung auch zu Reparaturzwecken bei im Kraftfahrzeug eingebauter Antriebsanordnung sicher, wobei der Deckel - der aus Kunststoff hergestellt und mittels einer einfachen Klipsverbindung befestigt sein kann - schädliche Umwelteinflüsse wie Schmutz, Feuchtigkeit, von der Antriebsanordnung fernhält.

Ein Ausführungsbeispiel der Erfindung ist im folgenden mit weiteren Einzelheiten näher erläutert.

Die schematische Zeichnung zeigt einen teilweisen Längsschnitt durch eine Antriebsanordnung zwischen einer Brennkraftmaschine und einem Geschwindigkeits-Wechseigetriebe, mit einem Mitnehmerblech, einem Zwischenfiansch und einem nur angedeuteten Zweimassenschwungrad kombiniert mit einer Reibungskupplung.

Die dargestellte Antriebsanordnung 10 zwischen einer Hubkolben-Brennkraftmaschine mit einer Rückwand 12 und einer Kurbelwelle 14 und einem angrenzenden Geschwindigkeits-Wechselgetriebe mit einer Eingangswelle 16 und einer Kupplungsglocke 18 weist ein Anfahrelement 20 auf, das sich aus einem Zweimassenschwungrad 22 und eine daran anschließende Reibungskupplung zusammensetzt. Es sei bemerkt, dass die angeführten Bauteile nur soweit dargestellt sind, als dies für das Verständnis der vorliegenden Erfindung erforderlich ist; soweit nicht dargestellt und beschrieben, kann die Antriebsanordnung einschließlich der Brennkraftmaschine und dem Wechselgetriebe bekannter und dem Fachmann geläufiger Konstruktion und Anordnung in einem Kraftfahrzeug sein.

Die Eingangswelle 16 des Wechselgetriebes ist in einer Lageraufnahme 24 an der Stirnseite der Kurbelwelle 14 drehbar gelagert. Ferner ist die Eingangswelle 16 in bekannter Weise im Gehäuse des Wechselgetriebes zumindest über ein weiteres Lager drehgelagert.

Das Zweimassenschwungrad 22 bzw. dessen Primärteil ist auf der Eingangswelle 16 des Wechselgetriebes bei 25 z.B. über eine nicht näher dargestellte Lagerung abgestützt und mit der Kurbelwelle 14 über ein scheibenförmiges Mitnehmerblech 26 und einen mit einer Kröpfung versehenen Zwischenflansch 28 trieblich verbunden.

Dabei ist zunächst das Mitnehmerblech 26 radial innen unter Zwischenschaltung einer rotationssymmetrischen Führungshülse 30 mittels Schrauben 32 mit der Kurbelwelle 14 fest verschraubt.

Des weiteren ist der Zwischenflansch 28 mittels Schrauben 34 mit dem Zweimassenschwungrad 24 fest verbunden.

Der Zwischenflansch 28 aus Stahlblech ist zweiteilig mit einem äußeren Radialabschnitt 28a und einem radial inneren, im Querschnitt U-förmigen Ringabschnitt 28b ausgeführt, welche Abschnitte bei 28c miteinander stoffschlüssig verbunden bzw. lasergeschweißt sind.

Der radial innen liegende Schenkel des Ringabschnittes 28b ist dabei wie ersichtlich zur Bildung einer zusätzlichen, radialen Abstützung des Zwischenflansches 28 auf der Führungshülse 30 teleskopisch geführt.

Die radial äußere Schraubverbindung zwischen dem Mitnehmerblech 26 und dem Zwischenflansch 28 erfolgt mittels z.B. drei umfangsversetzter Schrauben 36 (es ist nur eine Schraube 36 ersichtlich), die parallel zur Eingangswelle 16 ausgerichtet und jeweils durch eine Bohrung 28d im Zwischenflansch 28 und eine komplementäre Bohrung 26a im Mitnehmerblech 26 hindurch in eine Gewindebohrung 38a eines Anlasserzahnkranzes 38 eingeschraubt sind. Der Anlasserzahnkranz 38 ist zusätzlich in nicht dargestellter Weise zumindest an örtlichen Stellen mit dem Mitnehmerblech 26 verschweißt.

Der Anlasserzahnkranz 38 wirkt in bekannter Weise mit einem Zahnritzel (nicht dargestellt) eines elektrischen Startermotors zum Starten der Brennkraftmaschine zusammen.

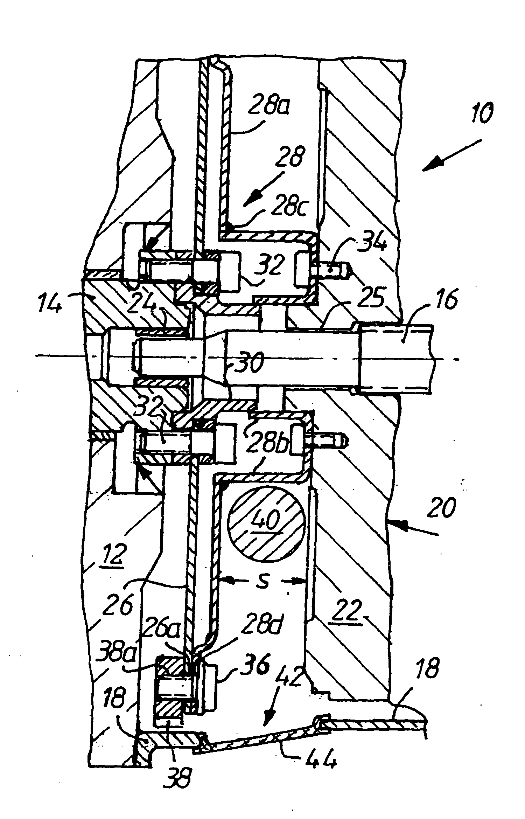

Wie aus der Zeichnung ohne weiteres ersichtlich ist, bildet die beschriebene Konfiguration des Zwischenflansches 28 mit dem äußeren Radialabschnitt 28a und dem Ringabschnitt 28b eine Kröpfung, die das Zweimassenschwungrad 22 in einen Abstand s von dem Radialabschnitt 28b bzw. dem Mitnehmerblech 26 abrückt, so dass wie ersichtlich eine Achswelle 40 eines seitlich an das Wechselgetriebe oder an die Brennkraftmaschine angebauten Differenziales mit aus-reichendem Freiraum die Eingangswelle 16 des Wechselgetriebes unterhalb des Ringabschnittes 28b und vor dem Zweimassenschwungrad 22 kreuzen kann.

Ferner ist durch den Abstand s sichergestellt, dass die Schrauben 36 zur Befestigung des Zwischenflansches 28 am Mitnehmerblech 26 von der Seite des Wechselgetriebes aus zugänglich sind bzw. mittels eines Werkzeuges einschraubbar und befestigbar sind.

Dazu ist in Einbaulage des Wechselgetriebes und der Brennkraftmaschine im Kraftfahrzeug betrachtet unten und radial benachbart zur Schraube 36 in der Kupplungsglocke 18 eine Öffnung 42 ausreichender Größe vorgesehen, von der aus die besagten Schrauben 36 einschraubbar und mittels eines geeigneten Werkzeuges anziehbar oder lösbar sind. Die Kurbelwelle 14 ist dabei jeweils so zu drehen, dass eine Schraube 36 nach der anderen eingesetzt werden kann.

Die Öffnung 42 ist mittels eines Deckels 44 verschließbar, der wie dargestellt in die Kupplungsglocke 18 an den Öffnungsrändern einklipsbar oder ggf. mittels Schrauben befestigbar ist.

Die Erfindung ist nicht auf das dargestellte Ausführungsbeispiel beschränkt. Anstelle eines Zweimassenschwungrades 22 mit Reibungskupplung kann auch ein Drehmomentwandler eines automatischen Getriebes oder ein anderes, an sich bekanntes Anfahrelement verwendet sein. Der Zwischenflansch 28 kann auch topfförmig und einteilig ausgeführt sein, insbesondere wenn keine Differenzial-Achswelle 40 in der gezeigten Anordnung vor dem Zweimassenschwungrad 22 vorgesehen ist.

## Patentansprüche

1. Antriebsanordnung (10) zwischen einer Brennkraftmaschine und einem nachgeschalteten Geschwindigkeits-Wechselgetriebe für Kraftfahrzeuge, mit einem an der Kurbelwelle (14) der Brennkraftmaschine über ein sich radial erstreckendes Mitnehmerblech (26) und mittels mehrerer Schrauben (34) befestigten Anfahrelement (20), das auf eine Eingangswelle (16) des Wechselgetriebes abtreibt, wobei die Eingangswelle (16) in einer angrenzenden Wand des Wechselgetriebes und in einer zentrischen Lageraufnahme (24) der Kurbelwelle (14) beiderseits des Anfahrelementes (20) drehbar gelagert ist, wobei das scheibenförmige Mitnehmerblech (26) mit einem axial unmittelbar benachbarten, eine Kröpfung zum Anfahrelement (22) aufweisenden Zwischenflansch (28) verschraubt ist, **dadurch gekennzeichnet, dass** der Zwischenflansch (28) zweiteilig aus einem äußeren, scheibenförmigen Radialabschnitt (28a) und einem radial inneren, im Querschnitt U-förmigen Ringabschnitt (28b) hergestellt ist, welche Abschnitte miteinander stoffschlüssig verbunden sind, wobei die Schrauben (36) von der Getriebeseite her durch eine Öffnung (42) in der Kupplungsglocke (18) des Wechselgetriebes und zwischen dem Radialabschnitt (28a) des Zwischenflansches (28) und dem Anfahrelement (22) einsetzbar und schraubbar sind.

2. Antriebsanordnung nach Anspruch 1, **dadurch gekennzeichnet, dass** der Zwischenflansch (28) ebenfalls aus Stahlblech hergestellt und mit dem Anfahrelement (22) im Bereich des inneren Ringabschnittes (28b) verschraubt ist.

3. Antriebsanordnung nach einem der vorhergehenden Ansprüche, wobei das Mitnehmerblech (26) einen Anlasserzahnkranz (38) zum elektrischen Starten der Brennkraftmaschine trägt, **dadurch gekennzeichnet, dass** in dem Anlasserzahnkranz (38) Gewindebohrungen (38a) ausgebildet sind, die in Verbindung mit den Schrauben (36) zur Befestigung des Zwischenflansches (28) am Mitnehmerblech (26) dienen.

4. Antriebsanordnung nach Anspruch 3, **dadurch gekennzeichnet, dass** der Anlasserzahnkranz (38) derart am Mitnehmerblech (26) befestigt ist, dass dessen Gewindebohrungen (38a) sich mit Bohrungen (26a, 28d) im Mitnehmerblech (26) und im Zwischenflansch (28) überdecken und dass die Schrauben (36) durch den Zwischenflansch (26) und das Mitnehmerblech (26) hindurch geschraubt sind.

5. Antriebsanordnung nach einem der vorhergehenden Ansprüche, **dadurch gekennzeichnet, dass** die Kröpfung des Zwischenflansches (28) derart ausgeführt ist, dass durch den daraus resultierenden Abstand s zwischen dem Radialabschnitt (28a) des Zwischenflansches (28) und dem benachbarten Anfahrelement (22) der Freigang einer sich durch die Kupplungsglocke (18) und quer zur Getriebe-Eingangswelle (16) erstreckenden Differenzial-Achswelle (40) sichergestellt ist.

6. Antriebsanordnung nach einem der vorhergehenden Ansprüche, **dadurch gekennzeichnet, dass** an der Kurbelwelle (14) mit dem Mitnehmerblech (26) eine Führungshülse (30) befestigt ist, die in Verbindung mit dem Zwischenflansch (28) eine der Lageraufnahme (24) in der Kurbelwelle (14) axial benachbarte Führung für das Anfahrelement (22) bildet.

7. Antriebsanordnung nach Anspruch 6, **dadurch gekennzeichnet, dass** der radial innere Schenkel des im Querschnitt U-förmigen Ringabschnittes (28b) des Zwischenflansches (28) die Führungshülse (30) teilweise überragt.

8. Antriebsanordnung nach einem der vorhergehenden Ansprüche, **dadurch gekennzeichnet, dass** die Öffnung (42) in der Kupplungsglocke (18) in der Einbauposition im Kraftfahrzeug nach unten ausgerichtet und mittels eines Deckels (44) verschließbar ist.

## Claims

1. Drive arrangement (10) between an internal combustion engine and a downstream change speed transmission for motor vehicles, comprising a starting element (20) which is fastened to the crankshaft (14) of the internal combustion engine via a radially extending driver plate (26) and by means of a plurality of screws (34) and which provides drive to an input shaft (16) of the change speed transmission, wherein the input shaft (16) is rotatably mounted in an adjoining wall of the change speed transmission and in a central bearing receptacle (24) of the crankshaft (14) on both sides of the starting element (20), wherein the disc-shaped driver plate (26) is screwed to an axially directly adjacent intermediate flange (28) which has a right-angled bend with respect to the starting element (22), **characterized in that** the intermediate flange (28) is produced in two parts from an outer, disc-shaped radial portion (28a) and a radially inner ring portion (28b) of U-shaped cross section, which portions are connected in an integrally bonded manner to one another, wherein the screws (36) can be inserted and screwed from the transmission side through an opening (42) in the clutch bell (18) of the change speed transmission and between the radial portion (28a) of the intermediate flange (28) and the starting element (22).

2. Drive arrangement according to Claim 1, **characterized in that** the intermediate flange (28) is also produced from steel plate and is screwed to the starting element (22) in the region of the inner ring portion (28b).

3. Drive arrangement according to either of the preceding claims, wherein the driver plate (26) bears a starter toothed ring (38) for electrically starting the internal combustion engine, **characterized in that** threaded holes (38a) are formed in the starter toothed ring (38) and serve, in conjunction with the screws (36), to fasten the intermediate flange (28) to the driver plate (26).

4. Drive arrangement according to Claim 3, **characterized in that** the starter toothed ring (38) is fastened to the driver plate (26) in such a way that its threaded holes (38a) overlap with holes (26a, 28d) in the driver plate (26) and in the intermediate flange (28) and that the screws (36) are screwed through the intermediate flange (28) and the driver plate (26).

5. Drive arrangement according to one of the preceding claims, **characterized in that** the right-angled bend of the intermediate flange (28) is designed in such a way that, through the resulting spacing s between the radial portion (28a) of the intermediate flange (28) and the adjacent starting element (22), the free passage of a differential axle shaft (40) extending through the clutch bell (18) and transversely to the transmission input shaft (16) is ensured.

6. Drive arrangement according to one of the preceding claims, **characterized in that** a guide sleeve (30) is fastened to the crankshaft (14) with the driver plate (26) and, in conjunction with the intermediate flange (28), forms a guide for the starting element (22) that is axially adjacent to the bearing receptacle (24) in the crankshaft (14).

7. Drive arrangement according to Claim 6, **characterized in that** the radially inner leg of the cross-sectionally U-shaped ring portion (28b) of the intermediate flange (28) partially projects beyond the guide sleeve (30).

8. Drive arrangement according to one of the preceding claims, **characterized in that**, in the installed position in the motor vehicle, the opening (42) in the clutch bell (18) is oriented downwardly and can be closed by means of a cover (44).

## Revendications

1. Système d'entraînement (10) entre un moteur à combustion interne et une boîte de vitesses montée en aval, pour véhicules automobiles, avec un élément de démarrage (20) fixé au moyen de plusieurs vis (34) sur le vilebrequin (14) du moteur à combustion interne par le biais d'une tôle d'entraînement (26) s'étendant radialement, lequel réalise une prise de force sur un arbre d'entrée (16) de la boîte de vitesses, l'arbre d'entrée (16) étant monté à rotation dans une paroi adjacente de la boîte de vitesses et dans un logement de palier central (24) du vilebrequin (14) de chaque côté de l'élément de démarrage (20), la tôle d'entraînement en forme de disque (26) étant vissée avec une bride intermédiaire (28) immédiatement axialement adjacente présentant une partie courbée vers l'élément de démarrage (22), **caractérisé en ce que** la bride intermédiaire (28) est réalisée en deux parties constituées d'une portion radiale extérieure (28a) en forme de disque et d'une portion annulaire radialement intérieure (28b) de section transversale en forme de U, lesdites portions étant connectées les unes aux autres par liaison de matière, les vis (36) pouvant être enfoncées et vissées depuis le côté de la transmission à travers une ouverture (42) dans la cloche d'embrayage (18) de la boîte de vitesses et entre la portion radiale (28a) de la bride intermédiaire (28) et l'élément de démarrage (22).

2. Système d'entraînement selon la revendication 1, **caractérisé en ce que** la bride intermédiaire (28) est également fabriquée en tôle d'acier et est vissée à l'élément de démarrage (22) dans la région de la portion annulaire intérieure (28b).

3. Système d'entraînement selon l'une quelconque des revendications précédentes, dans lequel la tôle d'entraînement (26) porte une couronne dentée de démarreur (38) pour le démarrage électrique du moteur à combustion interne, **caractérisé en ce que** dans la couronne dentée de démarreur (38) sont réalisés des alésages filetés (38a) qui, conjointement avec les vis (36), servent à la fixation de la bride intermédiaire (28) sur la tôle d'entraînement (26).

4. Système d'entraînement selon la revendication 3, **caractérisé en ce que** la couronne dentée de démarreur (38) est fixée sur la tôle d'entraînement (26) de telle sorte que ses alésages filetés (38a) viennent en coïncidence avec des alésages (26a, 28d) dans la tôle d'entraînement (26) et dans la bride intermédiaire (28), et **en ce que** les vis (36) sont vissées à travers la bride intermédiaire (26) et la tôle d'entraînement (26).

5. Système d'entraînement selon l'une quelconque des revendications précédentes, **caractérisé en ce que** la partie courbée de la bride intermédiaire (28) est réalisée de telle sorte que le passage libre pour un arbre d'essieu différentiel (40) s'étendant à travers la cloche d'embrayage (18) et transversalement à l'arbre d'entrée de la boîte de vitesses (16) soit assuré par la distance en résultant s entre la portion radiale (28a) de la bride intermédiaire (28) et l'élément de démarrage adjacent (22).

6. Système d'entraînement selon l'une quelconque des revendications précédentes, **caractérisé en ce qu'**un manchon de guidage (30) est fixé sur le vilebrequin (14) à la tôle d'entraînement (26), lequel forme en liaison avec la bride intermédiaire (28) un guide axialement adjacent au logement de palier (24) dans le vilebrequin (14) pour l'élément de démarrage (22).

7. Système d'entraînement selon la revendication 6, **caractérisé en ce que** la branche radialement intérieure de la portion annulaire (28b) de section transversale en forme de U de la bride intermédiaire (28) fait saillie en partie au-delà du manchon de guidage (30).

8. Système d'entraînement selon l'une quelconque des revendications précédentes, **caractérisé en ce que** l'ouverture (42) dans la cloche d'embrayage (18) est orientée vers le bas dans la position de montage dans le véhicule automobile, et peut être fermée au moyen d'un couvercle (44).
